# EUROPÄISCHE PATENTANMELDUNG

(11) **EP 0 674 099 A1**
(43) Veröffentlichungstag der Anmeldung: **27.09.1995**
(21) Anmeldenummer: 95810140.4
(22) Anmeldetag: 03.03.1995
(51) Int. Cl.: F02C 7/16

(54) **Verfahren zur Kühlung von thermische belasteten Komponenten einer Gasturbogruppe**

(30) Priorität: 21.03.1994 DE 4409567
(71) Anmelder: ABB Management AG, CH-5401 Baden (CH)
(72) Erfinder: Frutschi, Hans-Ulrich, CH-5223 Riniken (CH)

(57) **Zusammenfassung**

Bei einem Verfahren zur Kühlung von thermisch belasteten Komponenten (8, 10) einer Gasturbogruppe (1) als Teil einer Kombianlage, welche danebst noch aus einem Abhitzedampferzeuger (2) und einem Dampfkreislauf (3) besteht, wird eine Menge Sattdampf (25) aus einer Trommel (15) des Dampfkreislaufes (3) entnommen. Die genannten Komponenten, nämlich Brennkammer (8) und Turbine (10), werden mit diesem Sattdampf (25) in Serie gekühlt, um anschliessend einer Dampfturbine (18) des Dampfkreislaufes (3) an passender Stelle (28) rückgeleitet zu werden. Der zur Kühlung eingesetzte Dampf (25) aus der Dampfturbine (18) wird bei Bedarf stromauf der zu kühlenden Komponenten (8, 10) mit einem Anteil Wasser (30) aus dem Abhitzedampferzeuger (2) moderiert.

## Beschreibung

### Technisches Gebiet

Die vorliegende Erfindung betrifft ein Verfahren gemäss Oberbegriff des Anspruchs 1.

### Stand der Technik

Bei einer thermischen Kombikraftwerksanlage wird zur Kühlung der thermisch belasteten Komponenten üblicherweise Luft aus dem Prozess entnommen und diesen zugeführt. Bei dieser Art von Kühlung wird der wirksame Massenstrom der Anlage durchwegs geschmälert, insoweit, als der Wirkungsgrad der Anlage Einbusse erleidet. Dies hängt im wesentlichen damit zusammen, dass bei Kombianlagen der neueren Generation, was die Turbogruppe anbelangt, in der Regel keine zusätzliche Luft zur Verfügung steht, welche ohne Einbusse der Leistung und des Wirkungsgrades der Anlage abgezweigt werden könnte.

### Darstellung der Erfindung

Hier will die Erfindung Abhilfe schaffen. Der Erfindung, wie sie in den Ansprüchen gekennzeichnet ist, liegt die Aufgabe zugrunde, bei einem Verfahren der eingangs genannten Art Massnahmen betreffend die Kühlung der thermisch belasteten Komponenten der Anlage vorzuschlagen, welche den Wirkungsgrad und die spezifische Leistung zu erhöhen vermögen.

Für die Kühlung der Turbinenstatoren und der Brennkammern eignet sich der mittlere Dampfdruck einer Kombianlage mit bespielsweise Dreidruck-Abhitzedampferzeuger besonders gut. Zu diesem Zweck wird der Frischdampf aus der Kesseltrommel passenden Druckes durch Wärmeaufnahme aus den zu kühlenden Komponenten überhitzt und der Dampfturbine an geeigneter Stelle zugeführt. Sollte die genannte Ueberhitzung zu weit führen, so kann durch Wassereinspritzung an geeigneter Stelle korrigierend eingegriffen werden. Ist hingegen die Ueberhitzung zu schwach, so kann mit einer bestimmten Menge Rauchgase nachgeholfen werden. Was die Kühlungsphilosophie der thermisch belasteten Komponenten betrifft, ist anzumerken, dass die Kühlung in Serie und/oder parallel geschaltet werden kann. An sich ist die Entnahme von Dampf zu Kühlzwecken nicht allein auf die Mitteldruck-Kesseltrommel beschränkt, ebensogut kann der Kühldampf aus der Niederdruck- und/oder aus der Hochdruck-Kesseltrommel bezogen werden.

Kühldampf kann ferner aus passender Stelle der Dampfturbine entnommen werden und an einer Stelle tieferen Druckes wieder in diese eingebracht werden. Dieser so entnommene Kühldampf kann nach Bedarf durch Wassereinspritzung teilweise oder ganz enthitzt werden. Vorzugsweise wird dieses Wasser nach dem Economizer entnommen.

Bei Gasturbinenanordnungen mit mehreren Turbinen und Brennkammern in unterschiedlichen Druckzonen wird die passende Kesseltrommel und/oder eine passende Stelle der Dampfturbine zur Lieferung der erforderlichen Kühldampfmengen angezapft.

Während des Anfahrvorganges können die relevanten zu kühlenden Komponenten entweder in herkömmlicher Weise mit Luft, oder durch eine fremde Dampfquelle mit einem Kühlmedium versorgt werden.

Die wesentlichen Vorteile der Erfindung sind darin zu sehen, dass die tiefere Temperatur und die fast doppelte spezifische Wärmekapazität von Dampf eine wesentlich höhere Heissgastemperatur bei gleichbleibender Metalltemperatur ermöglicht, als dies bei Luftkühlung der Fall ist.
Wird die Kühlung nach einem geschlossenen Konzept durchgeführt, ergibt dies einen besseren polytropen Turbinen-Wirkungsgrad als das offene Konzept, wie es bei Luftkühlung üblicherweise verwendet wird. Die geschlossene Dampfkühlung der thermisch belasteten Komponenten wirkt signifikant erhöhend auf Leistung und Wirkungsgrad der Kombianlage.

Vorteilhafte und zweckmässige Weiterbildungen der erfindungsgemässen Aufgabenlösung sind in den weiteren Ansprüchen gekennzeichnet.

Im folgenden wird anhand der Zeichnungen Ausführungsbeipiele der Erfindung näher erläutert. Alle für das unmittelbare Verständnis der Erfindung nicht erforderlichen Elemente sind fortgelassen. Die Strömungsrichtung der verschiedenen Medien ist mit Pfeilen angegeben. Gleiche Elemente sind in den verschiedenen Figuren mit den gleichen Bezugszeichen versehen.

### Kurze Beschreibung der Zeichnungen

Es zeigt:
- Fig. 1: eine Kombianlage, bei welcher der Kühlungsdampf aus der Kesseltrommel entnommen wird,
- Fig. 2: eine Kombianlage mit geschlossener Dampfkühlung und Hauptdampfentnahme aus der Dampfturbine und
- Fig. 3: eine Kombianlage mit sequentieller Verbrennung innerhalb der Gasturbogruppe.

### Wege zur Ausführung der Erfindung, gewerbliche Verwertbarkeit

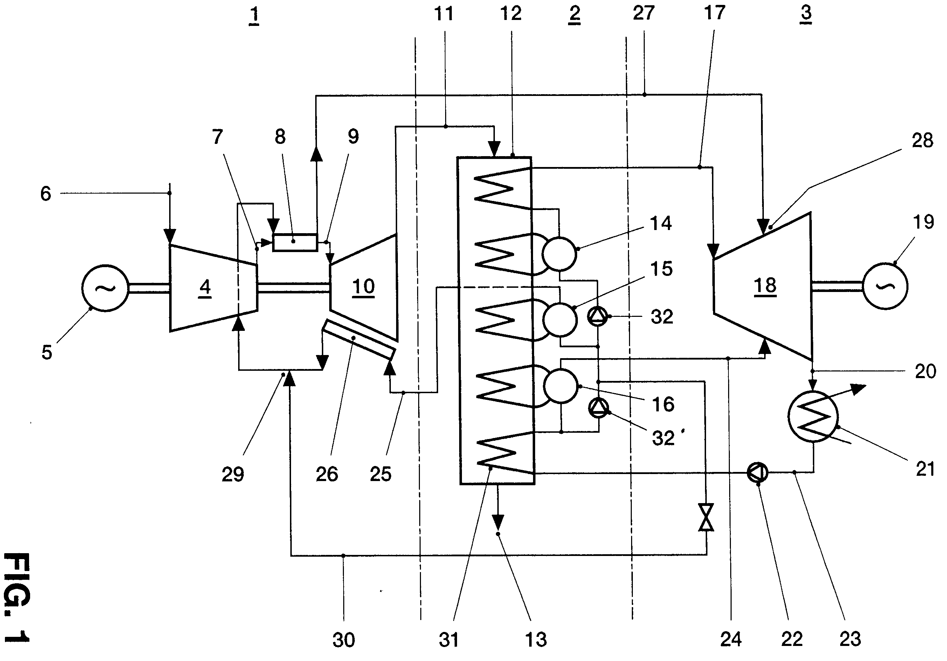

Fig. 1 zeigt eine Kombianlage, welche aus einer Gasturbogruppe 1, einem Abhitzedampferzeuger 2 und einer Dampfkreislauf 3 besteht. Die Gasturbogruppe 1, der Abhitzedampferzeuger 2 und der Dampfkreislauf 3 sind in ihren wichtigsten Komponenten dargestellt. Die Gasturbogruppe 1 besteht aus einem Verdichter 4, der mit einem Generator 5 gekuppelt ist. Im Verdichter 4 wird die angesaugte Frischluft 6 auf Druck gebracht. Die so verdichtete Luft 7 wird dann in einer nachgeschalteten Brennkammer 8 zu Heissgas 9 aufbereitet, welches anschliessend eine nachgeschaltete Turbine 10 beaufschlagt. Die Umsetzung der freiwerdenden Energie zu Strom geschieht im genannten Generator 5, wobei diese Maschine 5 so ausgelegt ist, dass sie auch motorische Funktionen übernehmen kann, was regelmässig beim Anwurf der Gasturbogruppe 1 der Fall ist. Die Brennkammer 8 wird mit einem gasförmigen und/oder flüssigen Brennstoff betrieben. Nach Entspannung in der Turbine 10 durchströmen die noch mit einem hohen kalorischen Potential versehenen Abgase 11 einen Abhitzekessel 12, in welchem in Wärmetauschverfahren Dampf erzeugt wird, der dann das Arbeitsmedium des nachgeschalteten Dampfkreislaufes 3 bildet. Die kalorisch ausgenutzen Abgase strömen anschliessend als Rauchgase 13 ins Freie. Beim hier gezeigten Abhitzekessel 12 handelt es sich um eine mehrstufige Auslegung mit drei Trommeln 14, 15, 16. Aus der freigesetzten thermischen Energie im Abhitzekessel 12 wird Hochdruckdampf 17 erzeugt, der, allenfalls über einen nicht dargestelletn Zwischenüberhitzer, die Beaufschlagung einer Dampfturbine 18 übernimmt. Selbstverständlich ist es möglich, nach einer ersten Teilentspannung den Dampf in einem weiteren Zwischenüberhitzer wieder aufzuheizen und anschliessend damit eine Mittel- und NiederdruckTurbine zu beaufschlagen. Die anfallende Energie aus der Dampfturbine 18 wird über einen angekuppelten Generator 19 in Strom umgewandelt. Der entspannte Dampf 20 wird in einem wasser- oder luftgekühlten Kondensator 21 kondensiert. Durch eine stromab des Kondensators 21 wirkende Kondensatpumpe 22 wird das Kondensat 23 in einen nicht gezeigten Speisewasserbehälter und Entgaser gefördert. Eine weitere nicht gezeigte Pumpe pumpt anschliessend das Wasser in den Abhitzekessel 12. Zuerst durchläuft das Wasser einen Economizer 31, um anschliessend über eine interdependente, durch verschiedene Pumpen 32 aufrechterhaltene Strömungsführung mit den Trommeln 16, 15, 14 die verschiedenen Druckstufen des Abhitzekessels 12 zu durchströmen. Aus der Trommel 16 wird Niederdruckdampf 24 zur zusätzlichen Beaufschlagung der Dampfturbine 18 entnommen. Aus der Mitteldrucktrommel 15 wird eine Menge Sattdampf 25 entnommen. Dieser wird in Erfüllung seiner Kühlaufgabe zuerst durch den Stator 26 der Turbine 10 und anschliessend durch die zu kühlenden Wände der Brennkammer 8 geleitet. Hier erfährt der Sattdampf 25 eine Ueberhitzung, worauf er als Arbeitsdampf 27 mit entsprechend erhöhtem Arbeitspotential der Dampfturbine 18 an passender Stelle 28 zugeführt wird. Um die hierbei entstehende Ueberhitzung im zulässigen Rahmen zu halten, kann dem Kühldampf an passender Stelle 29 Wasser 30 als im Economizer 31 vorgewärmtes Kondensat zugeführt werden. Der Einfachheit halber sind in der Figur die Mitteldruck- und Hochdruck-Economizer weggelassen worden. Für den Stator 26 am Turbinenende könnte natürlich Dampf niedrigen Druckes aus der Trommel 16 als Kühlmedium entnommen werden, sowie bei Gasturbinen mit grossem Druckverhältnis mindestens für den Bereich der Brennkammer und der Hochdruckturbine Dampf aus der Trommel 14 herangezogen werden. Die Möglichkeit, den Kühldampf der Dampfturbine 18 einer Stelle tieferen Druckes zuzuleiten, gestaltet die Wahl eines für die Erfüllung der Kühlaufgabe konfortablen Druckgefälles. Falls nicht die gesamte in der Trommel 15 erzeugte Dampfmenge zur Kühlung verwendet wird, kann der überschüssige Teil der Dampfturbine 18 zugeführt werden.

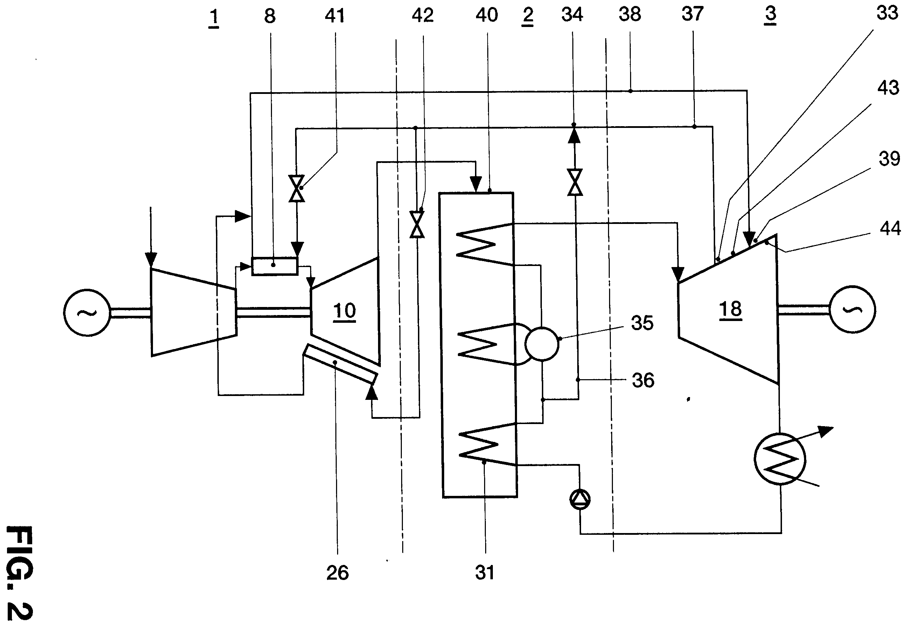

Fig. 2 zeigt im wesentlichen die Schaltung gemäss Fig. 1. Insbesondere bei Kombischaltungen mit Ein- oder Zweidruckkessel befindet sich unter Umständen keine Kesseltrommel auf einem für die Kühldampfentnahme geeigneten Druckniveau. In Fig. 2 ist ein Eindruckkessel 40 gezeigt. Der Dampfdruck in der zu kühlenden Komponente sollte immer etwas über dem Gasdruck der Komponente liegen, um Gaseinbrüche in den Dampfkreislauf zu vermeiden. Zuviel Ueberdruck wiederum bedeutet einen unnötigen Exergieverlust. Hier bietet sich die Kühldampfentnahme aus der Dampfturbine 18 an einer Zapfstelle 33 an. Die Temperatur dieses Dampfes kann unter Umständen zu hoch sein, so dass eingegriffen werden muss. Zu diesem Zweck wird abströmungsseitig des Economizer 31 und stromauf der Trommel 35 eine Menge Wasser entnommen, welche über eine ventilbestückte Leitung 36 in die Dampfentnahmeleitung 37 an Stelle 34 einströmt. Der Kühldampf über die Leitung 37 führt einerseits zum Stator 26 der Turbine 10, andererseits zur Brennkammer 8. Nach erfolgter Kühlung der thermisch belasteten Komponenten hat dieser Dampf eine Ueberhitzung erfahren, worauf er als Arbeitsdampf über eine Leitung 38 mit entsprechend erhöhtem Arbeitspotential der Dampfturbine 18 an passender Stelle 39 zugeführt wird. Die Kühlung der Turbine 10 und der Brennkammer 8 geschehen hier individuell, indem die Leitung 37 stromauf der genannten Komponenten abzweigt, wobei die Rückführung des überhitzten Dampfes wieder gemeinsam über eine einzige Leitung 38 erfolgt. Entsprechende Ventile 41, 42 sorgen für eine individuelle Dampfmenge zu den einzelnen Komponenten. Um die Exergieverluste bei Teillastbetrieb möglichst klein zu halten, können die Dampfentnahme und die Dampfrückführung an Stellen tieferen oder höheren Druckes erfolgen, wie dies andeutungsweise mit den Stellen 43, 44 gezeigt ist. Die Umschaltung erfolgt hier über nicht gezeigte Ventile.

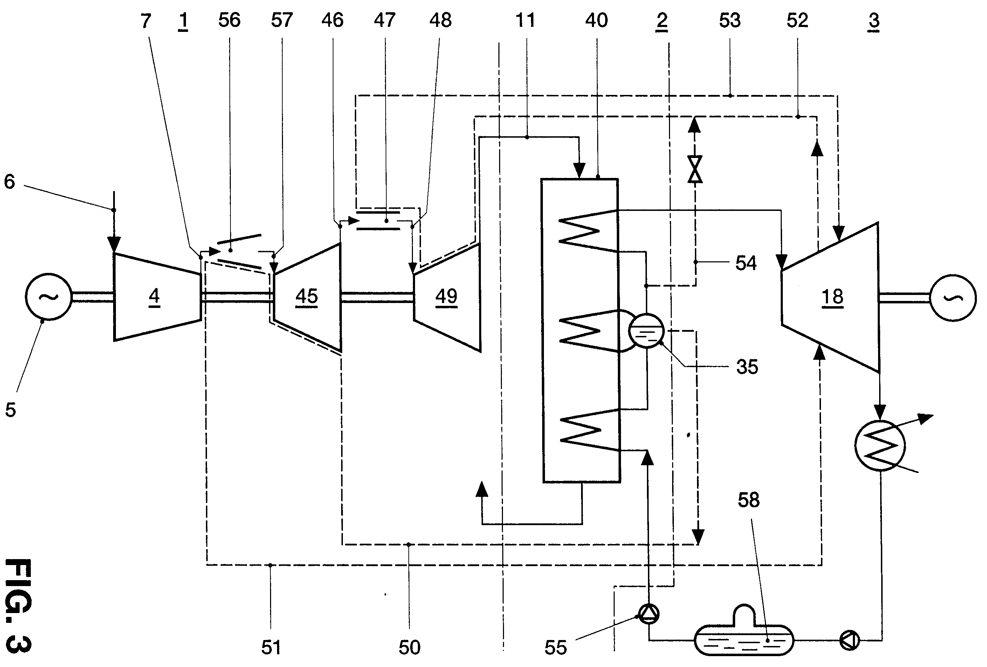

Fig. 3 zeigt eine weitere Kombischaltung, welche sich gegenüber den vorangegangenen im wesentlichen darin unterscheidet, dass die Gasturbogruppe 1 eine sequentielle Verbrennung mit zwei Turbinen aufweist, wobei der Dampfkreislauf 3 mit einem Entgaser 58 und zugehöriger Pumpe 55 ergänzt ist. Die verdichtete Luft 7 aus dem Kompressor 4 gelangt zunächst in eine erste Brennkammer 56, die mit einem flüssigen und/oder gasförmigen Brennstoff betrieben wird, und welche vorzugsweise als Ringbrennkammer ausgebildet ist. Die hierin aufbereiteten Heissgase 57 beaufschlagen eine Hochdruck-Turbine 45, welche eine relativ kleine Expansion aufweist, dergestalt, dass die Abgase 46 eine noch recht hohe Temperatur aufweisen. Diese strömen in eine zweite Brennkammer 47, welche vorzugsweise als Ringrohrbrennkammer ausgebildet ist, und in welcher die Verbrennung vorzugsweise durch Selbstzündung vonstatten geht. Anschliessend beaufschlagen diese Heissgase 48 eine Niederdruck-Turbine 49. Die Abgase 11 durchströmen dann in gewohnter Manier den Abhitzekessel 40. Die Verdoppelung der thermisch belasteten Komponenten, die zu kühlen sind, zwingt zu einer Vergrösserung der Kühldampfmenge. Die erste Brennkammer 56 und die Hochdruck-Turbine 45 werden in Serie mit Dampf 50 aus der Trommel 35 gekühlt. Der überhitzte Dampf aus dieser Kühlung wird dann über eine Rückführungsleitung 51 an passender Stelle in die Dampfturbine 18 eingeleitet. Die zweite Brennkammer 47 und die Niederdruck-Turbine 49 werden mit Dampf 52 aus der Dampfturbine 18 ebenfalls in Serie gekühlt. Auch hier wird der überhitze Dampf über eine Rückführungsleitung 53 an passender Stelle in die Dampfturbine 18 eingeleitet. Eine weitere ventilbestückte in die Kühldampfströmung 52 mündende Leitung 54 sorgt bei Bedarf für eine Zumischung des Kühldampfes mit überhitztem Dampf. Die Kühlung der einzelnen Komponenten kann auch parallel erfolgen, wie dies bereits aus Fig. 2 hervorgeht. Grundsätzlich ist zu beachten, dass Kühldampf aus der Dampfturbine 18 eine mildere Wirkung gegenüber Sattdampf aus der Trommel 35 hat. Beim letzteren fällt die Kühlung stärker aus, wobei hier aber auf die entstehenden Wärmespannungen Rücksicht genommen werden muss. Schlussendlich ist hier auch ein Abhitzedampfsystem nach dem Hochdruck-Prinzip möglich, wobei die Kühldampfentnahme aus Kesseltrommeln und aus Dampfturbinen optimal gestaltbar sind.

Da die Kühlsysteme erfahrungsgemäss nicht vollkommen dicht sein können, ist im Verlauf des Kühlbetriebes mit einem gewissen Dampfverlust in den Gasturbinenkreislauf zu rechnen. Ein solcher erhöht zwar die spezifische Leistung, schmälert aber den durch Dampfkühlung erzielbaren Wirkungsgradgewinn. Grundsätzlich lässt sich die Kühlung der rotierenden Teile der Turbinen 10, 45, 49 ebenfalls mit Dampf im geschlossenen System durchführen. Hier ist insbesondere auf die Leckverluste zu achten. Selbstverständlich ist es bei Bedarf auch möglich, die Dampfturbine mit Dampf zu kühlen, der aus der Kesseltrommel 35 abgezweigt wird, wobei dieser unter Ausnützung des Ueberhitzungsdruckabfalles der Dampfturbine 18 schon am Eintritt wieder zugeführt werden kann. Ebenso zu kühlen liessen sich durch Dampf auch Ventilspindeln und Hochdruckstopfbüchsen.

### Bezeichnungsliste

- 1: Gasturbogruppe
- 2: Abhitzedampferzeuger
- 3: Dampfkreislauf
- 4: Verdichter
- 5: Generator
- 6: Frischluft
- 7: Verdichtete Luft
- 8: Brennkammer
- 9: Heissgas
- 10: Turbine
- 11: Abgase
- 12: Abhitzekessel
- 13: Rauchgase
- 14: Trommel
- 15: Trommel
- 16: Trommel
- 17: Hochdruckdampf
- 18: Dampfturbine
- 19: Generator
- 20: Entspannter Dampf
- 21: Kondensator
- 22: Kondensatpumpe
- 23: Kondensat
- 24: Niederdruckdampf
- 25: Sattdampf
- 26: Stator
- 27: Arbeitsdampf
- 28: Einleitungsort
- 29: Zumischungsstelle
- 30: Wasser
- 31: Economizer
- 32: Pumpen
- 33: Zapfstelle Kühldampf
- 34: Zumischungsstelle
- 35: Trommel
- 36: Ventilbestückte Leitung
- 37: Kühldampfleitung
- 38: Rückführungsleitung
- 39: Einleitungsort des überhitzten Dampfes
- 40: Eindruckkessel
- 41: Ventil
- 42: Ventil
- 43: Dampfentnahmestelle
- 44: Dampfrückführungsstelle
- 45: Hochdruck-Turbine
- 46: Heisse Abgase
- 47: Zweite Brennkammer
- 48: Heissgase
- 49: Niederdruck-Turbine
- 50: Kühldampf
- 51: Rückführungsleitung
- 52: Kühldampf
- 53: Rückführungsleitung
- 54: Ventilbestückte Leitung
- 55: Pumpe
- 56: Erste Brennkammer
- 57: Heissgase
- 58: Mischwärmer/Entgaser

## Patentansprüche

1. Verfahren zur Kühlung von thermisch belasteten Komponenten einer Gasturbogruppe als Teil einer Kombianlage, welche danebst noch aus einem Abhitzedampferzeuger und einem Dampfkreislauf besteht, wobei die Gasturbogruppe im wesentlichen aus mindestens einem Verdichter, mindestens einer Brennkammer und mindestens einer Turbine besteht, dadurch gekennzeichnet, dass zur Kühlung einer oder mehrerer thermisch belasteten Komponenten (8, 10, 56, 45, 47, 48) der Gasturbogruppe (1) Sattdampf (25, 30, 50) aus dem Abhitzedampferzeuger (2) und/oder überhitzter Dampf (37, 52) aus dem Dampfkreislauf (3) eingesetzt wird, und dass der zur Kühlung eingesetzte Dampf in eine Dampfturbine (18) des Dampfkreislaufes (3) rückgeleitet wird.

2. Verfahren nach Anspruch 1, dadurch gekennzeichnet, dass die Kühlung der thermisch belasteten Komponenten (8, 10, 56, 45, 47, 48) parallel und/oder in Serie durchgeführt wird.

3. Verfahren nach Anspruch 1, dadurch gekennzeichnet, dass beim Einsatz von überhitztem Dampf (37, 52) die Kühlung der thermisch belasteten Komponenten (8, 10, 48, 49) über einen geschlossenen Kühlsystem durchgeführt wird.

4. Verfahren nach Anspruch 2, dadurch gekennzeichnet, dass der überhitzte Dampf (37, 52) stromauf der zu kühlenden Komponenten (8, 10, 48, 49) mit einem Anteil Wasser und/oder Kondensat aus dem Abhitzedampferzeuger (2) vermischt wird.
